# EUROPÄISCHE PATENTSCHRIFT

(11) **EP 0 614 830 B1**
(45) Veröffentlichungstag und Bekanntmachung des Hinweises auf die Patenterteilung: **09.10.1996**
(21) Anmeldenummer: 93118118.4
(22) Anmeldetag: 09.11.1993
(51) Int. Cl.: B65G 13/06, B65G 1/04, B65G 47/54

(54) **Förderanlage mit einem Quertransportwagen und Rollenförderern**
Transporting plant equipped with a transverse transfer car and roller conveyors
Installation de transport munie d'un chariot de transfert transversal et de transporteurs à rouleaux

(30) Priorität: 06.02.1993 DE 9301665 U
(43) Veröffentlichungstag der Anmeldung: 14.09.1994
(73) Patentinhaber: wtt FÖRDERTECHNIK GmbH, 42929 Wermelskirchen (DE)
(72) Erfinder: Rolf, Wilhelm, D-42929 Wermelskirchen (DE)
(74) Vertreter: Niemann, Uwe, Dr.-Ing.

(56) Entgegenhaltungen:
- EP-A- 0 100 867
- FR-A- 2 334 890
- FR-A- 2 450 765
- FR-A- 2 517 649

## Beschreibung

Die Erfindung betrifft eine Förderanlage, bestehend aus einem schienengebundenen Quertransportwagen mit antreibbaren Förderrollen und mehreren entlang des Weges des Quertransportwagens endenden antriebslosen Rollenförderern.

Derartige Förderanlagen sind aus der Praxis bekannt. Sie werden zum Transport schwerer Güter, insbesondere palettierter Gutstapel, eingesetzt. Grundsätzlich mag damit die Übergabe eines Gutstapels von dem Quertransportwagen bei angetriebenen Förderrollen auf einen antriebslosen Rollenförderer möglich sein, Probleme können sich aber dann ergeben, wenn der Gutstapel die letzte angetriebene Förderrolle des Quertransportwagens verlassen hat und sich nicht selbsttätig auf dem antriebslosen Rollenförderer weiterbewegt. Eine Übergabe bzw. Antransport in umgekehrter Richtung ist jedoch nicht möglich.

Aufgabe der Erfindung ist es, eine Förderanlage in der eingangs beschriebenen Gattung so zu verbessern, daß Güter, insbesondere palettierte Gutstapel, von einem antriebslosen Rollenförderer auf einen Quertransportwagen oder umgekehrt übergeben werden können.

Diese Aufgabe wird dadurch gelöst, daß der Quertransportwagen eine in Transportrichtung des Rollenförderers ausfahrbare Schubstange aufweist, die oberseitig zumindest abschnittsweise einen Reibbelag trägt, der beim Ausfahren der Schubstange an der Unterseite der Rollen eines Rollenförderers angreift. Zur Übergabe wird die Schubstange des vor das Ende eines Rollenförderers bewegten Quertransportwagens ausgefahren. Die Schubstange bzw. deren Reibbelag greift an der Unterseite der Rollen des antriebslosen Rollenförderes an und dreht diese Rollen, die dabei die auf diesen Rollen befindlichen Güter in Richtung auf den Quertransportwagen bewegen, wo sie anschließend von den angetriebenen Förderrollen des Quertransportwagens weiterbewegt werden. Umgekehrt werden die Rollen des antriebslosen Rollenförderers beim Einfahren der Schubstange so bewegt, daß Güter vom Quertransportwagen auf den antriebslosen Rollenförderer übergeben werden können.

Zur Sicherstellung eines hinreichenden Reibkontaktes zwischen dem Reibbelag der Schubstange und den Rollen des antriebslosen Rollenförderers kann der Rollenförderer unterhalb seiner Rollen eine insbesondere federnd abgestützte Führungsschiene für die Schubstange aufweisen.

Zum Antrieb der Schubstange kann diese unterseitig eine Verzahnung aufweisen, in die ein Zahnrad einer am Quertransportwagen angeordneten Antriebseinheit eingreift. Bei einer bevorzugten Ausführung der Erfindung weist die Schubstange ein unten offenes U-förmiges Profil auf, zwischen dessen U-Schenkeln eine Laschenkette gehalten ist, in die ein Kettenrad der Antriebseinheit eingreift. Eine solche Anordnung arbeitet auch bei herstellungsbedingten oder betriebsbedingten Toleranzen zuverlässig.

An den Außenseiten der U-Schenkel können Gleitschienen befestigt sein, denen eine Führung am Quertransportwagen zugeordnet ist.

Die Förderanlage kann eine Steuerung derart aufweisen, daß zur Übergabe von einem Rollenförderer auf den Quertransportwagen zunächst die Schubstange ausfährt sowie dann mit Zeitverzug der Förderrollenantrieb des Quertransportwagens startet und daß zur Übergabe vom Quertransportwagen auf einen Rollenförderer zunächst die Schubstange bis in ihre Endlage ausfährt sowie anschließend der Förderrollenantrieb des Quertransportwagens startet und dann mit Zeitverzug die Schubstange zurückfährt. Zum Stoppen insbesondere der Antriebseinheit der Schubstange können übliche Endschalter eingesetzt werden. Zum Stoppen des Förderrollenantriebs kann am Quertransportwagen rollenfördererseitig eine Lichtschranke angeordnet sein.

Im Folgenden wird ein in der Zeichnung dargestelltes Ausführungsbeispiel der Erfindung erläutert; es zeigen:

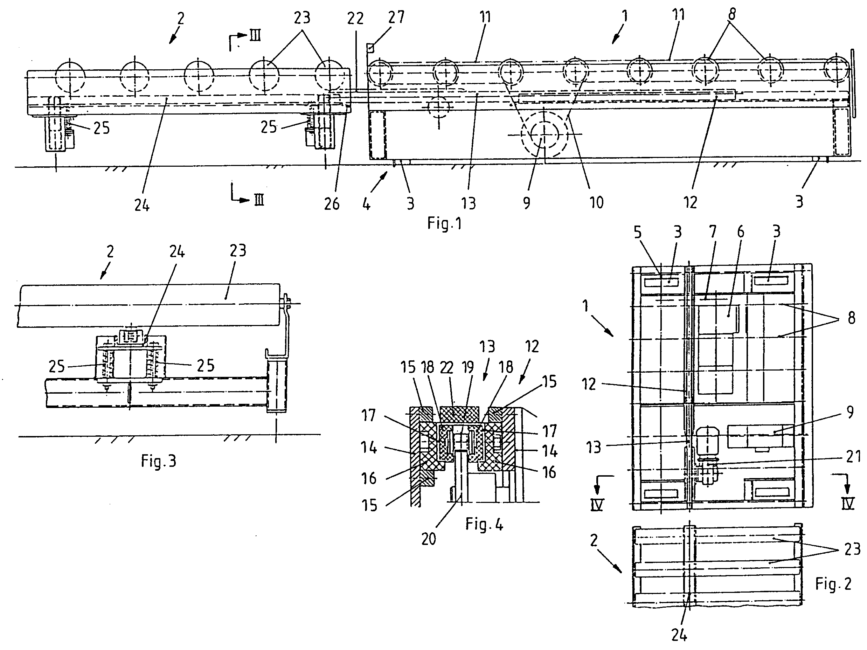

- Fig. 1: teilweise die Ansicht einer Förderanlage,
- Fig. 2: eine Draufsicht auf den Gegenstand nach Figur 1,
- Fig. 3: teilweise einen Schnitt in Richtung III-III durch den Gegenstand nach Figur 1,
- Fig. 4: teilweise einen Schnitt in Richtung IV-IV durch den Gegenstand nach Figur 2.

Die in der Zeichnung dargestellte Förderanlage besteht aus einem schienengebunden Quertransportwagen 1 und mehreren entlang des Weges des Quertransportwagens 1 endenden, antriebslosen Rollenförderern 2. In der Zeichnung ist nur ein Rollenförderer 2 wiedergegeben.

Der Quertransportwagen 1 besitzt angetriebene Räder 3, die auf in den Boden eingelassenen Schienen 4 laufen. Die Räder 3 bzw. ihre Achse 5 sind von einem Motor 6 über eine Transmission 7 antreibbar.

An der Oberseite des Quertransportwagens 1 sind mehrere Förderrollen 8 gelagert, die in üblicher Weise von einem Motor 9 über Transmissionen 10, 11 antreibbar sind.

Unterhalb der Förderrollen 8 ist eine sich parallel zur Achse 5 erstreckende Führung 12 für eine Schubstange 13 angeordnet. Die Führung 12 besteht aus zueinander parallelen vertikalen Wangen 14, an denen innenseitig mit Abstand voneinander angeordnete Führungsleisten 15 befestigt sind, zwischen denen Gleitschienen 16 geführt sind. Die Gleitschienen 16 sind an den Außenseiten der U-Schenkel 17 eines zur Schubstange 13 gehörenden, U-förmigen Profils befestigt. Zwischen den Innenseiten der U-Schenkel 17 ist eine beidseits an Tragkörpern 18 gehaltene Laschenkette 19 angeordnet, die zumindest mit ihren Enden an der Schubstange 13 befestigt ist. In die Laschenkette 19 greift ein Kettenrad 20 ein, welches mit einer Antriebseinheit 21 in beiden Richtungen antreibbar ist.

Die Schubstange 13 mit ihrem C-Profil erstreckt sich bei der dargestellten Ausführung über die ganze Breite des Quertransportwagens 1. An ihrem dem Rollenförderer 2 zugewandten Ende trägt die Schubstange 13 oberseitig einen Reibbelag 22, der sich bei der dargestellten Ausführung zumindest über eine Länge erstreckt, die dem doppelten Abstand von benachbarten Rollen 23 des Rollenförderers 2 entspricht.

Die Rollen 23 des Rollenförderers 2 sind freilaufend. Unterhalb der Rollen 23 ist eine beim Ausführungsbespiel nach oben offene, U-förmige Führungsschiene 24 für die Schubstange 13 angeordnet. Die Führungsschiene 24 ist über vertikale Federn 25 am Rollenförderer 2 abgestützt. Die Führungsschiene 24 besitzt am freien Ende des Rollenförderers 2 eine Einlaufschräge 26.

Die dargestellte Förderanlage arbeitet wie folgt: Ein auf den Rollen 23 am Ende des Rollenförderers 2 stehender, z.B. palettierter Gutstapel soll auf den Quertransportwagen 1 übergeben werden. Dazu wird der Quertransportwagen 1 so vor den betreffenden Rollenförderer 2 gefahren, daß die Schubstange 13 mit der Führungsschiene 24 fluchtet. Dann wird die Schubstange 13 ausgefahren, so daß sie in die Führungsschiene 24 gelangt. Der Reibbelag 22 der Schubstange 13 greift an der Unterseite der freilaufenden Rollen 23 an und dreht diese so, daß der palettierte Gutstapel in Richtung auf den Quertransportwagen 1 bewegt wird. Eine nicht dargestellte Steuerung startet dann mit Zeitverzug den Motor 9 der Förderrollen so, daß der zumindest teilweise bereits auf den Quertransportwagen 1 bewegte Gutstapel von den angetriebenen Förderrollen 8 übernommen und vollständig auf den Quertransportwagen 1 bewegt wird. Eine am rollenfördererseitigen Ende des Quertransportwagens 1 angeordnete Lichtschranke 27 stoppt den Motor 9 der Förderrollen 8, wenn das Ende des Gutstapels die Lichtschranke 27 freigibt. Die Schubstange 13 wird wieder eingefahren.

Soll umgekehrt ein Gutstapel vom Quertransportwagen 1 auf den Rollenförderer 2 übergeben werden, wird zunächst die Schubstange 13 bis in ihre Endlage ausgefahren. Nicht dargestellte Endschalter stoppen die Antriebseinheit 21 der Schubstange 13, wenn diese ihre Endlagen erreicht hat. Nach dem Ausfahren der Schubstange 13 wird der Motor 9 der Förderrollen 8 gestartet, so daß die Förderrollen 8 den Gutstapel in Richtung auf den Rollenförderer 2 bewegen. Mit Zeitverzug wird dann die Antriebseinheit 21 der Schubstange 13 gestartet, so daß die Schubstange 13 wieder eingezogen wird, wobei sie über ihren Reibbelag 22 die freilaufenden Rollen 23 des Rollenförderers 2 so bewegt, daß der Gutstapel vollständig auf den Rollenförderer 2 übergeben wird.

## Patentansprüche

1. Förderanlage, bestehend aus einem schienengebundenen Quertransportwagen (1) mit antreibbaren Förderrollen (8) und aus mehreren entlang des Weges des Quertransportwagens endenden antriebslosen Rollenförderern (2), **dadurch gekennzeichnet,** daß der Quertransportwagen (1) eine in Transportrichtung des Rollenförderers (2) ausfahrbare Schubstange (13) aufweist, die oberseitig zumindest abschnittsweise einen Reibbelag (22) trägt, der beim Ausfahren der Schubstange (13) an der Unterseite der Rollen (23) eines Rollenförderers (2) angreift.

2. Förderanlage nach Anspruch 1, **dadurch gekennzeichnet,** daß die Rollenförderer (2) unterhalb ihrer Rollen (23) eine Führungsschiene (24) für die Schubstange (13) aufweisen.

3. Förderanlage nach Anspruch 2, **dadurch gekennzeichnet,** daß die Führungsschiene (24) federnd abgestützt ist.

4. Förderanlage nach einem der Ansprüche 1 bis 3, **dadurch gekennzeichnet,** daß die Schubstange (13) unterseitig eine Verzahnung aufweist, in die ein Zahnrad einer Antriebseinheit eingreift.

5. Förderanlage nach Anspruch 4, **dadurch gekennzeichnet,** daß die Schubstange (13) ein unten offenes, U-förmiges Profil aufweist, daß zwischen den U-Schenkeln (17) eine Laschenkette (19) gehalten ist, und daß die Antriebseinheit (21) ein in die Laschenkette (19) eingreifendes Kettenrad (20) aufweist.

6. Förderanlage nach Anspruch 5, **dadurch gekennzeichnet,** daß an den Außenseiten der U-Schenkel (17) Gleitschienen (16) befestigt sind, denen eine Führung (14, 15) am Quertransportwagen (1) zugeordnet ist.

7. Förderanlage nach einem der Ansprüche 1 bis 6, **gekennzeichnet durch** eine Steuerung derart, daß zur Übergabe von einem Rollenförderer (2) auf den Quertransportwagen (1) zunächst die Schubstange (13) ausfährt sowie dann mit Zeitverzug der Förderrollenantrieb (9) des Quertransportwagens (1) startet und daß zur Übergabe vom Quertransportwagen (1) auf einen Rollenförderer (2) zunächst die Schubstange (13) bis in ihre Endlage ausfährt sowie anschließend der Förderrollenantrieb (9) des Quertransportwagens (1) startet und dann mit Zeitverzug die Schubstange (13) zurückfährt.

8. Förderanlage nach einem der Ansprüche 1 bis 7, **dadurch gekennzeichnet,** daß am Quertransportwagen (1) rollenfördererseitig eine Lichtschranke (27) angeordnet ist.

## Claims

1. Conveyor installation consisting of a track-bound transverse transport carriage (1) with drivable conveyor rollers (8) and of several non-driven roller conveyors (2) ending along the path of the transverse transport carriage, characterised thereby that the transverse transport carriage (1) comprises a pushrod (13), which can be driven out in transport direction of the roller conveyor (2) and which at the upper side carries at least in sections a friction coating (22) which engages at the underside of the rollers (23) of a roller conveyor (2) during driving-out of the pushrod (13).

2. Conveyor installation according to claim 1, characterised thereby that the roller conveyors (2) have a guide rail (24) for the pushrod (13) below their rollers (23).

3. Conveyor installation according to claim 2, characterised thereby that the guide rail (24) is resiliently supported.

4. Conveyor installation according to one of claims 1 to 3, characterised thereby that the pushrod (13) has at its underside a toothing in which a gearwheel of a drive unit engages.

5. Conveyor installation according to claim 4, characterised thereby that the pushrod (13) has a downwardly open, U-shaped profile, that a sprocket chain (19) is retained between the U-limbs (17) and that the drive unit (21) comprises a sprocket (20) engaging in the sprocket chain (19).

6. Conveyor installation according to claim 5, characterised thereby that slide rails (16) are fastened at the outer sides of the U-limbs (17) and are associated with a guide (14, 15) at the transverse transport carriage (1).

7. Conveyor installation according to one of claims 1 to 6, characterised by a control of such a kind that for transfer from a roller conveyor (2) to the transverse transport carriage (1) initially the pushrod (13) is driven out and then the conveyor rollers drive (9) of the transverse transport carriage (1) is started after a time delay and that for transfer from the transverse transport carriage (1) to a roller conveyor (2) initially the pushrod (3) is driven out into its end position and subsequently the conveyor rollers drive (9) of the transverse transport carriage (11) is started and then the pushrod (13) is driven back after a time delay.

8. Conveyor installation according to one of claims 1 to 7, characterised thereby that a light barrier (27) is arranged at the transverse transport carriage (1) at the side of the roller conveyors.

## Revendications

1. Installation de transport composée d'un chariot de transfert transversal (1) monté sur rails, qui est muni de rouleaux de transport (8) pouvant être entraînés, et de plusieurs transporteurs à rouleaux (2) non entraînés se terminant le long du parcours du chariot de transfert transversal, caractérisée en ce que le chariot de transfert transversal (1) présente une bielle (13) pouvant être déployée dans le sens d'avancement du transporteur à rouleaux (2), qui porte sur le dessus, au moins dans certaines parties, une garniture de friction (22) qui, lorsque l'on déploie la bielle (13), vient s'appliquer sur le dessous des rouleaux (23) d'un transporteur à rouleaux (2).

2. Installation de transport selon la revendication 1, caractérisée en ce que les transporteurs à rouleaux (2) présentent sous leurs rouleaux (23) une glissière de guidage (24) pour la bielle (13).

3. Installation de transport selon la revendication 2, caractérisée en ce que la glissière de guidage (24) prend appui avec ressort.

4. Installation de transport selon l'une des revendications 1 à 3, caractérisée en ce que la bielle (13) présente sur le dessous une denture avec laquelle se met en prise une roue dentée d'une unité motrice.

5. Installation de transport selon la revendication 4, caractérisée en ce que la bielle (13) présente un profilé en U ouvert en bas, en ce qu'entre les ailes de l'U (17) est maintenue une chaîne articulée (19), et en ce que l'unité motrice (21) présente une roue dentée (20) se mettant en prise avec la chaîne articulée (19).

6. Installation de transport selon la revendication 5, caractérisée en ce que sur les faces extérieures des ailes de l'U (17) sont fixées des glissières (16) auxquelles est associée une coulisse (14, 15) sur le chariot de transfert transversal (1).

7. Installation de transport selon l'une des revendications 1 à 6, caractérisée par une commande telle que, pour effectuer le transfert d'un transporteur à rouleaux (2) au chariot de transfert transversal (1), on déploie tout d'abord la bielle (13), puis l'entraînement (9) des rouleaux de transport du chariot de transfert transversal (1) se met en marche avec un certain retard, et que, pour effectuer un transfert du chariot de transport transversal (1) à un transporteur à rouleaux (2), on déploie tout d'abord la bielle (13) jusque dans sa position finale, puis l'entraînement (9) des rouleaux de transport du chariot de transfert transversal (1) se met en marche, avant que la bielle (13) ne revienne en arrière avec un certain retard.

8. Installation de transport selon l'une des revendications 1 à 7, caractérisée en ce qu'une barrière lumineuse (27) est placée sur le chariot de transfert transversal (1), du côté des transporteurs à rouleaux.
